# EUROPEAN PATENT APPLICATION

(11) **EP 1 780 982 A1**
(43) Date of publication of application: **02.05.2007**
(21) Application number: 05292257.2
(22) Date of filing: 26.10.2005
(51) Int. Cl.: H04L 29/08, H04L 29/06

(54) **Communication system, terminal and server for communication services plus method to provide communication services**

(71) Applicant: Alcatel Lucent, 75008 Paris (FR)
(72) Inventor: Laible, Volker, 70469 Stuttgart (DE); Wahl, Stefan, 71701 Schwieberdingen (DE)
(74) Representative: Brose, Gerhard

(57) **Abstract**

A communication system (1) for providing communication services to an end user is described, comprising
- a main operating system (12), device driver (24) and applications (17, 18, 19, 20, 21) located at the service provider side,
- computer peripherals (3) and external ports for input and output located at the end user side, wherein
- the computer peripherals (3) are connected via the external ports to the service provider by means of a secure data connection (10).

Furthermore a terminal (2) and a server (4) to be used in combination with said communication system (1) plus a method to provide communication services is described.

## Description

### Technical field:

The invention relates to a communication system providing communication services to an end user, plus a method to provide communication services to a user.

### Background of the invention:

Today's fixed communication devices are either Plain Old Telephone Service (POTS), Digital Enhanced Cordless Telecommunication (DECT), Integrated Services Digital Network (ISDN) phones or personal computers connected via a modem, like e.g. analog, ISDN, Digital Subscriber Line (DSL), cable modems and the like, to the internet. Thereby the term personal computer also comprises notebooks, Personal Digital Assistants (PDAs) and the like.

From an end-user point of view, phones are easy to install and handle but offer only a limited functionality, mostly just voice calls, maybe answering machines/voicemail or some now even offer SMS or MMS.

In contrast personal computers offer much more functionality, such as email, instant messaging, Internet Protocol (IP) -telephony, web-browsing etc. but the installation, configuration and maintenance of personal computers is rather difficult and complex. Also, today's of the shelf personal computers are too big, noisy and are not really customized for communication needs, e.g. they lack of telephone specific buttons or voice/email waiting indicators and the like.

Furthermore the operating systems of personal computers are much too complex, there are too many programs not really needed, too many icons and menus. So people get lost and spend too much time figuring out how they can use an application instead of actually using the application.

In addition, installing new peripheral devices often is too complicated or too difficult. Not to mention security issues, people are swamped with updating virus scanners and with configuring firewalls, since e.g. they don't know which applications they should allow to access the Internet. A lot of people do not regularly install new security patches, thus leaving their computer system vulnerable, which is not only a threat to their machine and data, but also a threat to other machines on the Internet, because their systems can be used for attacking other systems.

Also, today, no single device that offers services such as telephony, email, instant messaging, web-browsing on one single platform is available, that is as reliable and rather simple to use as classical telephones.

### Technical purpose of the invention:

The technical purpose of the invention is to develop a communication system that is able to provide telephone and computer functionalities and that is as easy to install, to maintain and to handle as classical telephones, plus a method to provide communication services via such a communication system.

### Disclosure of the invention and its advantages:

The invention's technical purpose is met by said communication system for providing communication services to an end user that is characterized by
- a main operating system, device driver and applications located at the service provider side,
- computer peripherals and external ports for input and output located at the end user side, wherein
- the computer peripherals are connected via the external ports to the service provider by means of a secure data connection.

The main idea of the invention is to provide a communication system that allows to easy access centrally managed communication services from different domains, such as telephony, voice-mail, push to talk, SMS, MMS, e-mail, instant-messaging and the like. Furthermore it also provides information and entertainment services like e.g. an easy and secure way to access the Internet. In addition it can also offer office services like word-processing and other applications.

An important feature of the communication system according to the invention is that only limited intelligence is located at the user side wherein the complex system is located at the service provider side. Thereby only the ports for input and output devices are located at the user side wherein the main operating system, device drivers, applications and the like are located at the service provider side. The service provider side and the user side are connected via a secure data connection such as e.g. DSL, cable or fiber.

Said communication system with the specifying features of claim 1 has the advantage over the state of the art that the end user does not need to know anything about the technology used. He does not need to fiddle with different end-devices such as telephones, personal computers and the like. He does not worry about installing and configuring the right software, worrying about firewalls and viruses and other security issues, regular updates etc. He does not need to boot a noisy computer before he can use the desired services. He preferably just has one single device, for example a terminal plugged into a socket in the wall or a splitter or another kind of adapter, wherein if desired he can plug-in of the shelf computer peripheral devices such as monitor, keyboard, mouse, printer, digital camera and the like into said terminal. Applications that provide communication services such as sending and receiving of emails, Short Message Services (SMS), Multimedia Messaging Standard (MMS), browsing the Internet or word processing are running on the main operating system and are accessed via the computer peripherals that are attached to the terminal. Using Wireless Local Area Network (WLAN) -technology the terminal does not have to be located close to the socket, allowing more flexible and individual designs of such terminals. Furthermore the communication system according to the invention allows access to the newest communication features and trends, without needing to understand and configure them.

A preferred embodiment of the communication system according to the invention is characterized by means to individually present information and provide communication services depending on the computer peripherals located at the user side and being attached to the main operating system via said secure data connection. Thereby it is for example thinkable that e.g. emails are translated into spoken words if no monitor is attached at the user side. It is also thinkable that the presentation of information and the kind of how services are provided to the user do not only depend on the computer peripherals located at the user side and being attached to the main operating system but also on user preferences.

In a preferred embodiment of the communication system according to the invention, the computer peripherals comprise means for voice input and output, e.g. a user interface with a microphone and a loudspeaker and/or a handset. Those means can also comprise means to dial a telephone number like e.g. a numeric keyboard that can be integral part of the microphone-loudspeaker-device. It is also thinkable that the computer peripherals comprise means for video input and output, e.g. a monitor and/or a webcam and/or a video camera or the like. Said computer peripherals can also comprise means for computer like data input and output, e.g. a monitor for graphical output, an alphanumeric keyboard for word processing, a mouse, a digital camera and/or a video camera and/or a disk drive and/or a printer for input and output of digital data and the like. Thereby it is important to mention that input and output takes place at the user site, wherein the applications to be used e.g. for web browsing, receiving, reading, writing and sending of emails, word processing, image editing and the like are running on the main operating system on the service provider site.

In another preferred embodiment of the communication system according to the invention, the secure data connection comprises an ISDN and/or a DSL connection for voice input and output and preferably a DSL connection for video and computer like data input and output. Thereby voice traffic does not necessarily need to be transported via an ISDN connection, it can also be transported via an IP-connection only or both.

A preferred embodiment of the invention comprises a terminal to be used in combination with the communication system, wherein said terminal is located at the user side of said communication system and is connected with the main operating system via the secure data connection, wherein said terminal at least comprises means to connect the computer peripherals with the main operating system via said secure data connection. Communication services such as computer like data input and output preferably are accessible via the computer peripherals attachable to the terminal. It is also thinkable that the terminal comprises internal means providing communication services to a user, like e.g. microphone and loudspeaker for voice input and output. Thereby said terminal is connected via the secure data connection with the main operating system and the computer peripherals are connected via said user terminal with the main operating system. The connection between the terminal and the computer peripherals can comprise a wire connection and/or a wireless connection.

In a preferred embodiment of the terminal according to the invention, said means to connect the computer peripherals with the main operating system via said secure data connection comprise external ports arranged at the terminal, wherein the terminal is connected with the main operating system via said secure data connection and wherein said computer peripherals are attachable to the main operating system via said external ports of the terminal. The external ports comprise e.g. Universal Serial Bus (USB), firewire, Video Graphics Array (VGA), Digital Visual Interface (DVI), S-Video, PS/2 ports and the like to be used to attach the computer peripherals to the terminal and via said terminal and the secure data connection to the main operating system. Thereby for video and graphical output e.g. a VGA or DVI or a S-Video port can be foreseen to connect a monitor and the like with the terminal and via said terminal with the main operating system. For example a USB or firewire port can be foreseen to connect a webcam, a video camera or the like with the main operating system for video input. For example a PS/2 or a USB port can be foreseen to connect a mouse with the terminal. For computer like input and output of digital data USB or firewire ports can be foreseen to connect a digital camera and/or a video camera and/or a disk drive and/or a printer with the terminal and via said terminal with the main operating system.

In a preferred embodiment of the terminal according to the invention, the external ports comprise a wireless connection. Many computer peripherals like e.g. printer, keyboard, mouse and the like are prepared to be attached to a computer via a wireless connection like e.g. Bluetooth or WLAN. The terminal according to the invention preferably provides wireless interfaces to wireless attach such computer peripherals to the main operating system via said terminal.

In a preferred embodiment of the terminal according to the invention, said terminal comprises internal devices such as buttons, e.g. buttons of a numerical or an alphanumerical keyboard to be used to dial a telephone number or to write a SMS, a display to be used e.g. to show a telephone number dialled or the telephone number of an incoming call, a loudspeaker e.g. for voice output, a microphone e.g. for voice input, and the like, and means to connect said internal devices with the main operating system via said secure data connection.

In another preferred embodiment of the terminal according to the invention, said internal devices comprise means for voice input and output, e.g. a microphone and a loudspeaker and/or a handset. Those means can also comprise means to dial e.g. a telephone number like e.g. a numeric keyboard or buttons that can be integral part of the microphone-loudspeaker-device or a similar user interface of the terminal.

Another preferred embodiment of the terminal according to the invention is characterized by means to configure a connection between a computer peripheral attached to the terminal and the main operating system located at the service provider side. The means to configure a connection between the computer peripheral and the main operating system can comprise means to recognize and/or identify newly attached computer peripherals and/or means to automatically or manually start a set-up procedure. The set-up procedure is executed for recognizing e.g. a newly attached computer peripheral, wherein during the set-up the kind and e.g. make and type of computer peripheral is identified and a device driver that fits for the particular computer peripheral is automatically installed on the main operating system. A manual set-up can be started e.g. by pushing a set-up button that is part of said means and that is arranged at the terminal. An advantage of such a terminal is that configuration of computer peripherals on the end-user side is as simple as connecting a plug into a port. Thereby it is thinkable that by pushing an install button, an auto-configuration procedure will be launched. In case this fails the user can be connected to a human assistant via telephone, which assistant can resolve the problem, since the service provider preferably can remotely configure and operate the terminal and the computer peripherals attached to the terminal.

A particular preferred embodiment of the terminal according to the invention is characterized by means to connect the user of the communication system on demand with an administrator of the service provider e.g. via a telephone connection. Those means can comprise e.g. an online assistant button, an online service button and the like. Thereby if the user is in trouble with the services provided can push the online assistant button and an administrator responsible for that user is informed and gets in contact with this user e.g. by telephone. Preferably the administrator is provided by the main operating system with the information actually retrieved by the user so that the administrator can help well directed and quick. The online service button is e.g. for older people, wherein by pushing this button email or instant message can be read to them, if they want to answer they press the online service button and an online assistant can e.g. type the answer for them. Thereby the assistant called by the online service button can be a human or can be a server or an application with voice recognition and voice-text translation functionalities.

Another particular preferred embodiment of the terminal according to the invention is characterized by means to call the attention of the user to newly received information. Such means can be e.g. one or more blinking LED or the like advising the receipt of newly received information like e.g. new emails, voice mails, SMS, MMS and the like. Said means can be activated by a signal that is sent from the main operating system to the terminal the very moment e.g. a message, an email or the like is received by the main operating system providing e.g. email functionalities. The advantage of such means is that the user is instantly informed about newly received information, also if the communication system is not used the very moment. The next time the user is using the communication system the newly received information is displayed automatically or is played back automatically, depending on the kind of information received and depending on the personal settings of the user and the computer peripherals attached to the terminal.

It is thinkable that the terminal is centrally managed by the provider. E.g. firmware-updates will be remotely installed. The services themselves run on central servers on the service provider side. So changing, extending or adding new services is much simpler.

A main advantage of the terminal according to the invention is that it will not be outdated as fast as computers. A terminal will be as long up to date as long as his input- and output ports are still state of the art. In contrast to a personal computer, the terminal is custom tailored for communication purposes, and therefore provides a more user-friendly an ergonomically way to these services. This makes the terminal and the communication system the terminal is part of particularly interesting for older people or computer laggards.

A preferred embodiment of the invention comprises a server to be used in combination with the communication system, wherein said server comprises or is part of said main operating system, and wherein said server comprises means to provide communication services to the user via said secure data connection and via computer peripherals located at the user site and connected with the server via said secure data connection. Thereby the server preferably comprises means to provide a secure data connection, means to be connected with computer peripherals located at the user site via the secure data connection, and means to provide communication services such as voice input and output and/or video input and output to the user.

A preferred embodiment of the server according to the invention is characterized by means to provide computer like applications such as email, web browsing, word processing, image editing and the like to a user via the computer peripherals located at the user site, wherein the content and the kind of providing the applications depends on the computer peripherals on the user site that are attached to the server on the service provider site via said secure data connection. Thereby the communication services provided by the server can not only comprise e.g. voice or video communication services but also information services and entertainment services, office services and other computer-like application services like data management, image editing, providing and usage of databases and disk space. Thereby the applications are installed on the server and are remotely provided to the user via the computer peripherals on the user site, wherein only input and output takes place at the user site via the computer peripherals and storing of data, running of the applications and the like takes place on the service provider site. Thereby office services comprise e.g. the usage of office applications such as word processing, providing of disk space e.g. to store personal data and the like. The availability of those services is depending on the computer peripherals attached to the server via the secure data connection.

A preferred embodiment of the server according to the invention is characterized by means to automatically recognize and preferably identify at least the kind of computer peripherals located at the user site and being attached to the server via said secure data connection. Thereby recognition means to detect what kind of computer peripheral is attached, e.g. if the computer peripheral is a monitor, a mouse, a keyboard, a video camera or the like. Identification means to detect e.g. the make and the type of the computer peripheral recognized.

Another preferred embodiment of the server according to the invention is characterized by means to automatically configure a connection between a newly attached computer peripheral and the server via sad secure data connection. Thereby after recognition and identification of the computer peripheral a set-up procedure is started automatically or is started manually by the user, e.g. by sending a signal to the server that informs the server about a newly installed computer peripheral.

Another preferred embodiment of the server according to the invention is characterized by means to individually present information and provide communication services depending on the computer peripherals attached to the server via said secure data connection and recognized by the server. Thereby it is thinkable that the means to individually present information and provide communication services comprise means for voice recognition and means to translate text to voice and vice versa. Depending on the user settings those means allow translating e.g. emails into spoken words and vice versa.

A particular preferred embodiment of the server according to the invention is characterized by means to synchronize content actually retrieved by the user with an administrator monitor, to allow to provide online assistance to the user on demand.

The server can also comprise means to inform the user about new messages, emails and the like received, e.g. in combination with the terminal described above. Thereby it is thinkable that the server sends a signal to the terminal the very moment e.g. a new email has been received. When receiving this signal, the terminal starts blinking, making sound or the like to call the attention of the user.

The main advantage of the server according to the invention is that additional data-storage space or computing power is provided on the server-side. Today lots of personal computers provide computing power or disk-space not used, while others lack of computing power or disk-space. This will be better balanced on server clusters. Furthermore the end-user does not have visible lP-connectivity to the Internet. He accesses the Internet through the server on the service providers side. There, not the user but the service provider needs to take care of security issues such as firewall configuration, viruses, etc. The user does not need to worry about computer crashes, hard disk failures etc. Even if computer peripherals or the terminal at the user site would crash, all the data will be securely stored on the server at the service provider side. Since all the personal data is already stored at the service provider side, it could also be easily accessed remotely via a mobile phone or a web-browser e.g. at an internet-café or hotel.

A preferred embodiment of the invention comprises a method to provide communication services to a user via a communication system, wherein said method comprises the steps of
- providing a main operating system located at the service provider side, wherein said main operating system provides said communication services to said user,
- providing computer peripherals located at the user side to be used to deploy said communication services, and
- providing a secure data connection between the main operating system and the computer peripherals.

The communication services provided can be e.g. voice or video communication services, information services, entertainment services and office services. Thereby information and entertainment services comprise e.g. the usage of internet applications like web browsers, email applications and the like, wherein office services comprise the usage of office applications such as word processing, database applications, image editing, providing disk space to store personal data and the like. Thereby the applications that can be used by the user via the computer peripherals run on the main operating system on the service provider side. Also the disk storage that can be used by the user is located at the main operating system.

A preferred embodiment of the method according to the invention is characterized in that the services provided depend on the computer peripherals attached to and recognized by the main operating system via said secure data connection. Thereby e.g. services like word processing are only possible if an alphanumeric keyboard and a monitor is attached e.g. via a terminal located at the user site to the main operating system, e.g. a server. Other services like e.g. receiving and sending of emails are adapted according to the computer peripherals attached at the user site. If for example no monitor is attached, it is thinkable that a server of the main operating system translates an email into spoken words and vice versa, so that a user can receive and send new emails via voice input and output.

Another preferred embodiment of the method according to the invention is characterized in that all and particularly newly attached computer peripherals are recognized and preferably identified automatically e.g. by automatically launching a set-up procedure.

A preferred embodiment of the method according to the invention is characterized in that particularly newly attached computer peripherals are recognized and preferably identified on demand by manually launching an automatic set-up procedure e.g. by pushing a peripheral device install button e.g. being arranged at a terminal at the user site.

Another preferred embodiment of the method according to the invention is characterized in that device drivers and the like required for the computer peripherals attached at the user side are automatically installed, launched and updated on the main operating system depending on the computer peripherals attached and/or recognized at the user side.

A particular preferred embodiment of the method according to the invention is characterized in that applications to be used for communication, information, office and entertainment services are automatically updated on the main operating system the very moment new updates, patches or software are available or are required by the user.

Another particular preferred embodiment of the method according to the invention is characterized in that hat communication services are provided on demand and are preferably also billed per usage. Doing so a user only has to pay for the services used. This has the main advantage that a user that requires only few times a year a particular application, e.g. a word processing application or a spreadsheet application only has to pay for this application when really using it.

In another preferred embodiment of the invention, said method is performed by a computer program product stored on a computer usable medium comprising computer readable program means for causing a computer to perform the method mentioned above, when said computer program product is executed on a computer.

### Brief description of the drawing, with

- Fig. 1: showing a scheme of a communication system according to the invention, and
- Fig. 2: showing an architecture of a communication system according to the invention.

### Paths for performing the invention:

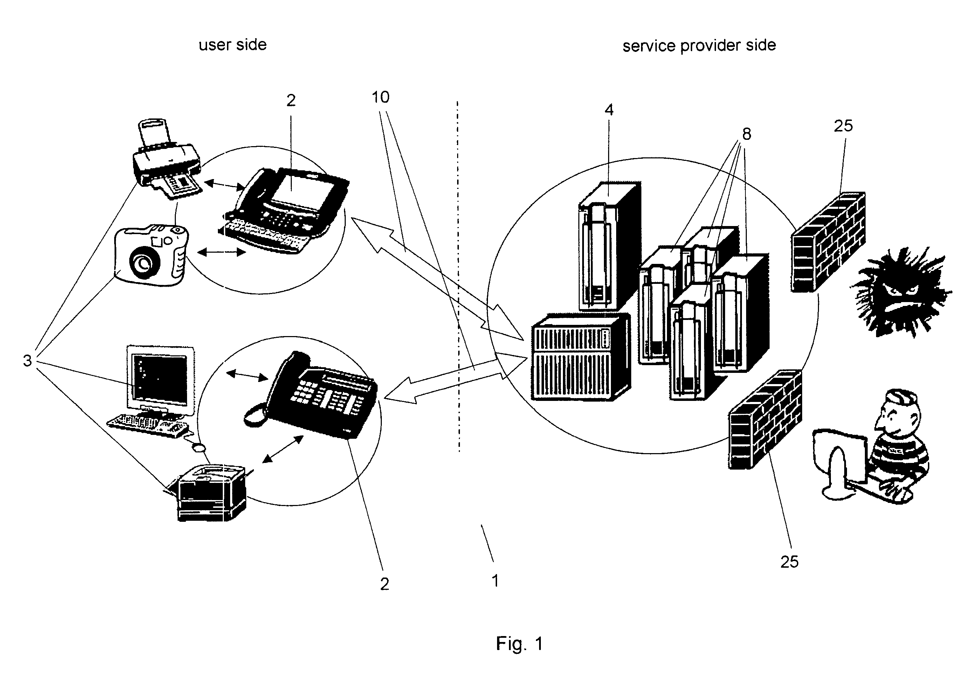

A Terminal Communication Service System (TCSS) 1 shown in Fig. 1 comprises a Terminal Communication Server (TCS) 4 located at the service provider side and terminal communication clients (TCC) 2 and commercial of the self computer peripherals COTS 3 and the like attached to the TCCs 2 at the user side. The idea of the TCSS 1 is that only limited intelligence is located at the user side comprising the ports for input and output devices, but the complex Main Operating System (MOS) comprising device drivers, applications and the like is located at the server side. Both sides are connected via a secure data connection 10 such as e.g. DSL, cable or fiber. The TCSS 1 is protected by firewalls 25 and the like at the service provider side so that the user does not have to care for security issue, updates and the like since all services are provides via the TCS 4.

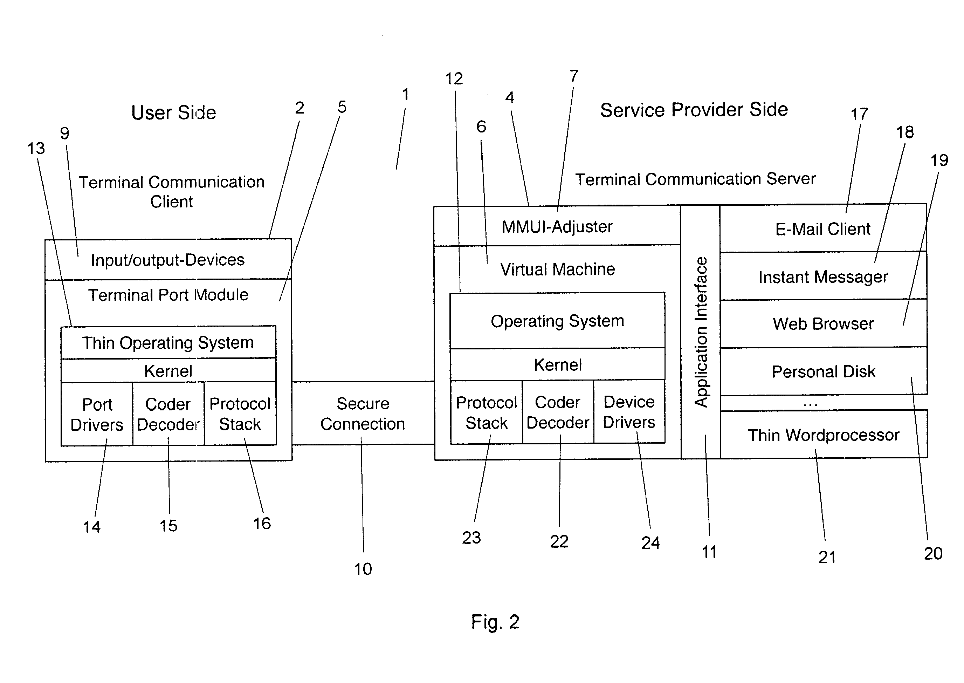

The basic principle and the architecture of the TCSS 1 are shown in Fig.1 and Fig. 2 respectively. The TCSS 1 comprises at least one TCC 2 located at the end-user side and a TCS 4 at the service provider side. The 'heart' of the TCC 2 is the Terminal Port Module (TPM) 5, which connects internal devices such as buttons, display, loudspeaker, microphone etc. and external ports such as e.g. VGA/DVI, PS/2 or USB ports for connecting COTS 3, such as monitor, keyboard, mouse, printer, digital camera etc., to a virtual machine (VM) 6 of the TCS 4 via the secure data connection 10.

The TCS 4 also has a Multi-Modal-User-Interface (MMUI) -Adjuster 7. Depending on the attached internal and external devices information can be individually presented to the user or collected from the user. Thereby presentation of information depends on device capabilities and user preferences.

The TCSS 1 allows easy access to centrally managed communication services from different domains, such as telephony, voice-mail, push to talk, SMS, MMS, e-mail, instant-messaging etc. Furthermore it also provides an easy and secure way accessing the Internet. In addition it can also offer office services such as word-processing and other applications.

The TCC 2 can have the shape of a regular desktop phone with a handset, keypad, display which size can vary depending on the design of the TCC 2 and for convenience a loudspeaker and microphone for handsfree speaking. Additionally it comprises the TPM 5 that can have the following ports:
- a network port for voice, e.g. ISDN, and data, e.g. DSL, connectivity
- analog phone output jacks,
- a DECT station,
- various USB ports for connecting COTS such as a printer, a scanner, a web-cam, a digital camera etc.,
- a headset or a loudspeaker output jack and a microphone input jack,
- a Bluetooth interface
- a VGA/DVI port for connecting COTS such as a monitor, a beamer and the like
- a S-Video or similar TV-output port for connecting a TV set,
- a PS/2 port for COTS keyboard and mouse
- a WLAN access point, and
- additional LAN output jacks.

Thereby it is important to mention that the TCC 2 is not a personal computer but just a remote terminal providing the function of a regular telephone, e.g. an ISDN telephone, plus input/output port linkage and data-connectivity to the MOS 12 at the service provider side. If no additional devices are attached to the TCC 2 it can operate like a regular phone wherein it might not even need an additional power source. But when attaching COTS 3 like e.g. monitor, keyboard and mouse it can be used as a terminal for accessing email, instant messaging or browsing the Internet. Alternatively the TCC 2 could also have a built in screen, e.g. a touch screen and/or keyboard, touchpad etc. Additionally it could also be used as a fax if COTS 3 like a printer and a scanner are attached to the TCC 2.

Most of the processing and all of the services do not run on the TCC 2, but on centralized servers on the service provider side. The TCC 2 basically only provides data-connectivity between the integrated and attached input- and output devices and the centralized servers running a kind of virtual personal computer or operating system.

The TCC 2 is centrally managed by the provider. E.g. firmware-updates will be remotely installed. The services themselves run on the TCS 4 or on an Application Server (AS) 8 on the service provider side. So changing, extending or adding new services is much simpler.

To ease configuration the TCC 2 can have a Subscriber Identity Module (SIM) - card where all the phone-numbers and information of the location are stored. It can also hold a key needed for encrypted Virtual Private Network (VPN) communication to the TCS 4.

Furthermore the TCC 2 can comprise an email waiting indicator, which starts blinking once the user receives a new message. Thereby it is also thinkable that a sound will be played or that a voice stream will be played announcing sender and subject of the email.

The TCC 2 can also comprise a peripheral device install button. By this mean configuration of peripheral devices on the end-user side is as simple as connecting a plug into a port and pushing the install button, which will launch an auto-configuration procedure on the server side. In case this fails the user will be connected to a human assistant via phone, who can resolve the problem, since the service provider can remotely configure the TCC 2 through the secure tunnel connecting the TPM 5 with the VM 6 of the TCS 4.

Furthermore it is thinkable that the TCC 2 comprises an online-assistant button. If the user runs into any problems e.g. by misunderstanding the graphical user interface displayed on a monitor attached to the TCC 2, he can just press the online-assistant button. Once pushed, the assistant can get access to the communication environment and can help and explain, since he sees what the customer sees. Helping can be improved by giving the online assistant a separate curser, allowing him to demonstrate to the user how to operate an application or function. Since such demonstrations are often to quick for a user, or it is likely that he might miss a step of the sequence necessary, the user has the option of recording all these curser movements, menu-selections and button clicks. Now he can view the sequence again later, in case he does not remember how something was done.

The TCC 2 can also comprise an online-service button. E.g. for older people email or instant message can be read to them, if they want to answer they press the Online-Service Button and an online assistant can e.g. type the answer for them. Thereby an AS 8 or the TCS 4 comprises means to translate text into spoken words and vice versa.

The TCS 4 comprises an application interface 11 providing access to various services such as email, instant message, personal disk space, a thin wordprocessor etc.

Having installed a TCSS 1, a service provider can easily bring new services to the user such as:
- Using the TCS 4 or an AS 8 for reading emails e.g. to old people, who cannot see that well anymore, their reply mail could contain a wav-file with the spoken message.
- Multi-user-functions, every party in the household has his own phone-number, and now incoming calls will either have a different ring-tone or they might even announce callee and caller. Configuration of the different users can be done either in a menu or with the help of an automatic or online assistant.

The service provider can also offer application to the user he will only have to pay per usage, while on personal computers it is common that you need to buy an application software and the price will remain the same, whether one uses it only once or many times.

In the following the architecture shown in Fig. 2 is described in detail. The TCC 2 located at the user side is connected via a secure data connection 10 with the TCS 4 located at the service provider side. The TCC 2 comprises the TPM 5 and attached internal input and output devices 9 as well as connectors for external input and output devices particularly COTS. The TPM 5 runs a thin operating system 13 mainly responsible for the port drivers 14 required for the ports COTS can be connected to, encoders and decoders 15 and a protocol stack 16 for communicating with the VM of the TCS via a secure data connection 10.

The TCS 4 comprises a VM 6, a MMUI-Adjuster 7 and an application interface 11 providing access to functions such as an email-client 17, instant messenger 18, web-browser 19, personal disk 20, thin wordprocessor 21 etc.
The VM 6 runs the main operating system 12. It has encoders and decoders 22 and a protocol stack 23 for communicating with the TCC 2. The VM 6 also runs the device drivers 24 required for the COTS attached to the TCC 2.
The MMUI-Adjuster 7 can adjust modes depending on the connected in- and output devices and user preferences. E.g. and incoming instant message or SMS will be converted to speech and played over the integrated loudspeaker of the TCC 2 in case the TCC 2 lacks of a display or the user prefers so.

### Commercial applicability:

The invention is commercially applicable particularly in the field of telecommunication like e.g. production and operation of networks for communication services.

### List of reference numerals

- 1: Terminal CommunicationService System
- 2: Terminal Communication Client
- 3: Commercial Of The Shelf Computer Peripherals
- 4: Terminal Communication Server
- 5: Terminal Port Module
- 6: Virtual Machine
- 7: Multi-Modal-User-Interface-Adjuster
- 8: Application Server
- 9: Internal input and output devices
- 10: Secure connection
- 11: Application interface
- 12: Main operating system
- 13: Thin operating system
- 14: Port drivers
- 15: Encoders and decoders
- 16: Protocol stack
- 17: E-mail client
- 18: Instant messager
- 19: Web browser
- 20: Personal disk
- 21: Thin wordprocessor
- 22: Encoders and decoders
- 23: Protocol stack
- 24: Device drivers
- 25: Firewall

## Claims

1. Communication system (1) for providing communication services to an end user, **characterized by**
- a main operating system (12), device driver (24) and applications (17, 18, 19, 20, 21) located at the service provider side,
- computer peripherals (3) and external ports for input and output located at the end user side, wherein
- the computer peripherals (3) are connected via the external ports to the service provider by means of a secure data connection (10).

2. Communication system according to claim 1, **characterized by** means (7) to individually provide communication services depending on the computer peripherals (3) located at the user side and being attached to the main operating system (12) via said secure data connection (10).

3. Communication system according to claim 1 or 2, **characterized in that** the computer peripherals (3) comprise means for voice input and output and/or means for video input and output and/or means for computer like data input and output.

4. Communication system according to claim 1, 2 or 3, **characterized in that** the secure data connection (10) comprises an ISDN and/or a DSL connection for voice input and output and preferably a DSL connection for video and/or computer like data input and output.

5. Terminal (2) to be used in combination with a communication system (1) according to one of the claims 1 to 4, **characterized in that** said terminal (2) is located at the user side of said communication system (1) and is connected with the main operating system (12) via the secure data connection (10), wherein said terminal (2) at least comprises means (14) to connect the computer peripherals (3) with the main operating system (12) via said secure data connection (10).

6. Terminal according to claim 5, **characterized in that** said means to connect the computer peripherals (3) with the main operating system (12) via said secure data connection (10) comprise external ports, wherein said computer peripherals (3) are attachable to the main operating system (12) via said external ports.

7. Terminal according to claim 5 or 6, wherein the external ports comprise a wireless connection.

8. Terminal according to one of the claims 5, 6 or 7, **characterized in that** said terminal (2) comprises internal devices (9) and means to connect said internal devices (9) with the main operating system (12) via said secure data connection (10).

9. Terminal according to claim 8, **characterized in that** said internal devices (9) comprise means for voice input and output.

10. Terminal according to one of the claims 5 to 9, **characterized by** means to configure a connection between a computer peripheral (3) attached to the terminal (2) and the main operating system (12) located at the service provider side.

11. Terminal according to one of the claims 5 to 10, **characterized by** means to connect the user of the communication system (1) on demand with an administrator of the service provider.

12. Terminal according to one of the claims 5 to 11, **characterized by** means to call the attention of the user to newly received information.

13. Server (4) to be used in combination with a communication system (1) according to one of the claims 1 to 4, **characterized in that** said server (4) comprises or is part of said main operating system (12) and comprises means to provide communication services via said secure data connection (10) to the user.

14. Server according to claim 13, **characterized by** means (11) to provide computer like applications (17, 18, 19, 20, 21) to a user via the computer peripherals (3) located at the user site, wherein the content and the kind of providing the applications (17, 18, 19, 20, 21) depends on the computer peripherals (3) that are attached to the server (4).

15. Server according to claim 13 or 14, **characterized by** means to automatically recognize and preferably identify computer peripherals (3) attached to the server (4) via said secure data connection (10).

16. Server according to claim 15, **characterized by** means to automatically configure a connection between a newly attached computer peripheral (3) and the server (4) via sad secure data connection (10).

17. Server according to one of the claims 13 to 16, **characterized by** means (7) to individually present information and provide communication services depending on the computer peripherals (3) attached to the server (4) via said secure data connection (10).

18. Server according to one of the claims 13 to 17 **characterized by** means to synchronize content actually retrieved by the user with an administrator monitor, to allow to provide online assistance to the user on demand.

19. Method to provide communication services to a user via a communication system (1) according to one of the claims 1 to 4, **characterized in** the steps of:
- providing a main operating system (12) located at the service provider side,
wherein said main operating system (12) provides said communication services to said user,
- providing computer peripherals (3) located at the user side to be used to deploy said communication services, and
- providing a secure data connection (10) between the main operating system (12) and the computer peripherals (3).

20. Method according to claim 19, **characterized in that** the services provided depend on the computer peripherals (3) attached to the main operating system (12) via said secure data connection (10).

21. Method according to claim 19 or 20, **characterized in that** computer peripherals (3) are recognized automatically.

22. Method according to claim 19 or 20, **characterized in that** computer peripherals (3) are recognized on demand by manually launching an automatic set-up procedure.

23. Method according to one of the claims 19 to 22, **characterized in that** device drivers (24) are automatically updated on the main operating system (12) depending on the computer peripherals (3) attached at the user side.

24. Method according to one of the claims 19 to 23, **characterized in that** applications (17, 18, 19, 20, 21) to be used for communication services are automatically updated on the main operating system (12) the very moment new updates, patches or software are available or are required by the user.

25. Method according to one of the claims 19 to 24, **characterized in that** communication services are provided on demand and preferably billed per usage.

26. Computer program product stored on a computer usable medium comprising computer readable program means for causing a computer to perform the method of anyone of the claims 19 to 25 when said computer program product is executed on a computer.
